# FASCICULE DE BREVET EUROPEEN

(11) **EP 2 790 355 B1**
(45) Date de publication et mention de la délivrance du brevet: **04.08.2021**
(21) Numéro de dépôt: 14164058.1
(22) Date de dépôt: 09.04.2014
(51) Int. Cl.: H04L 12/24, H04L 12/54, H04L 29/06

(54) **Procédé de caractérisation d'un réseau informatique**
Verfahren zur Charakterisierung eines Computernetz
A method of characterizing a computer network

(30) Priorité: 09.04.2013 FR 1300812
(43) Date de publication de la demande: 15.10.2014
(73) Titulaire: Thales, 92200 Neuilly Sur Seine (FR)
(72) Inventeur: Mabiala, Yves, 92622 Gennevilliers Cedex (FR); Huyot, Benoît, 92622 Gennevilliers Cedex (FR); De Maupeou, Stanislas, 92622 Gennevilliers Cedex (FR)
(74) Mandataire: Lavoix

(56) Documents cités:
- US-B1- 7 779 021
- "BotMiner: Clustering Analysis of Network Traffic for Protocol- and Structure-Independent Botnet Detection", PROCEEDINGS OF THE 17TH USENIX SECURITY SYMPOSIUM,, 15 July 2008 (2008-07-15), XP061009228,
- ANDREA BIANCO ET AL: "Web user-session inference by means of clustering techniques", IEEE / ACM TRANSACTIONS ON NETWORKING, IEEE / ACM, NEW YORK, NY, US, vol. 17, no. 2, 1 April 2009 (2009-04-01), pages 405-416, XP058320070, ISSN: 1063-6692, DOI: 10.1109/TNET.2008.927009

## Description

La présente invention concerne un procédé de caractérisation d'un réseau informatique présentant une topologie. La présente invention se rapporte aussi à un procédé de contrôle d'un réseau informatique. La présente invention se rapporte également à un programme d'ordinateur comportant des instructions de code de programmation aptes à être mises en œuvre par un processeur.

Un réseau informatique est un ensemble de stations reliées entre elles. Un réseau informatique est généralement géré par un ou plusieurs administrateurs. Un administrateur a notamment pour rôle de contrôler le fonctionnement du réseau. Pour cela, il est souhaitable de connaître en temps réel les caractéristiques du réseau.

Pour cela, il est connu d'utiliser des logiciels actifs donnant la cartographie du réseau par envoi de paquets de données aux différentes stations.

Mais, de tels logiciels ne peuvent pas être utilisés dans un réseau informatique sécurisé dans lequel les paquets restent bloqués par les pare-feu du réseau.

Il est également possible d'employer des logiciels passifs impliquant le branchement préalable de sondes dans le réseau.

Mais, dans un réseau informatique sécurisé, le branchement de sondes est interdit, ce qui empêche d'utiliser un tel logiciel passif.

Le document « BotMiner : Clustering Analysis of Network Traffic for Protocol- and Structure-Independent Botnet Détection » montre un procédé de détection de botnets qui se passe d'une connaissance préalable de botnets présents. Un botnet est un groupe d'instances de logiciel malfaisant, contrôlé par un protocole de contrôle et de commande des botnets. Le procédé de détection est indépendant de ce protocole et de la structure des botnets. Il regroupe par similarité le trafic observé dans les agrégats.

D'autre procédés sont également connus du document US 7 729 021 B1, et d'un article d'Andréa Bianco et al. intitulé « Web user-session inference by means of clustering technique ».

Il est connu du document EP 1 777 875 A une méthode consistant à agencer graphiquement les composants d'un réseau selon une représentation en couches à des fins de visualisation, le réseau comprenant des composantes de réseau et de différents types et des liaisons connectant les composantes de réseau. La méthode comprend la considération de plusieurs composantes de réseau comme des composantes sources. Pour chaque composante source, il est attribué des valeurs de distance minimale et pour chaque composante de réseau, il est attribué une valeur minimale de l'ensemble des valeurs minimales attribuées à la composante de réseau comme un niveau de hiérarchie. Le procédé comporte alors l'affichage des composantes de réseau dans une représentation en couches selon le niveau de hiérarchie attribué à chaque composante.

Toutefois, le procédé du document EP 1 777 875 A est non automatique, de mise en œuvre assez longue et s'applique donc difficilement aux réseaux informatiques présentant une taille importante.

Il existe donc un besoin pour un procédé de caractérisation d'un réseau informatique qui soit de mise en œuvre rapide et s'applique à tout type de réseau sécurisé ou non.

A cet effet, l'invention a pour objet un procédé de caractérisation d'un réseau informatique selon la revendication 1.

Suivant des modes de réalisation particuliers, le procédé de caractérisation comprend une ou plusieurs des caractéristiques suivantes, prise(s) isolément ou suivant toutes les combinaisons techniquement possibles :
- le procédé comporte, en outre, une détermination des données les plus fréquentes émises dans la pluralité des événements du journal, par une même quatrième station, pour obtenir des données les plus fréquentes déterminées, et une déduction d'une ou plusieurs caractéristiques relatives à la quatrième station en fonction des données les plus fréquentes déterminées.
- le réseau comporte un serveur de messagerie électronique, les données les plus fréquentes déterminées utilisent un protocole de communication spécifique, et une caractéristique déduite est une connexion de la quatrième station considérée au serveur de messagerie électronique.
- le procédé comporte, en outre, un affichage de la topologie du réseau informatique.
- un regroupement des stations à l'aide d'une méthode de classification de données.
- un regroupement des routeurs par une méthode de classification de données.
- un regroupement des stations et des routeurs par une méthode de classification de données.

L'invention a également pour objet un procédé de contrôle d'un réseau informatique présentant une topologie et comprenant une pluralité de stations propres à échanger des données entre elles et une pluralité de routeurs assurant l'acheminement des données entre les différentes stations. Le procédé comprend une caractérisation du réseau informatique par un procédé de caractérisation précédemment décrit pour obtenir un réseau informatique caractérisé, et une comparaison du réseau informatique caractérisé à un réseau informatique de référence.

Suivant des modes de réalisation particuliers, le procédé de contrôle comprend une ou plusieurs des caractéristiques suivantes, prise(s) isolément ou suivant toutes les combinaisons techniquement possibles :
- le procédé de contrôle comprend une détermination des modifications à apporter au réseau informatique caractérisé pour que le réseau informatique soit identique au réseau de référence.
- le procédé de contrôle comprend une détermination de la présence d'une anomalie dans le réseau selon un résultat de l'étape de comparaison.

L'invention concerne aussi un programme d'ordinateur comportant des instructions de code de programmation aptes à être mises en œuvre par un processeur, caractérisé en ce que le programme est apte à mettre en œuvre un procédé de caractérisation d'un réseau informatique tel que précédemment décrit ou un procédé de contrôle d'un réseau informatique tel que précédemment décrit.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une représentation schématique d'un réseau informatique, et
- figure 2, un ordinogramme d'un exemple de mise en œuvre du procédé de caractérisation selon l'invention.

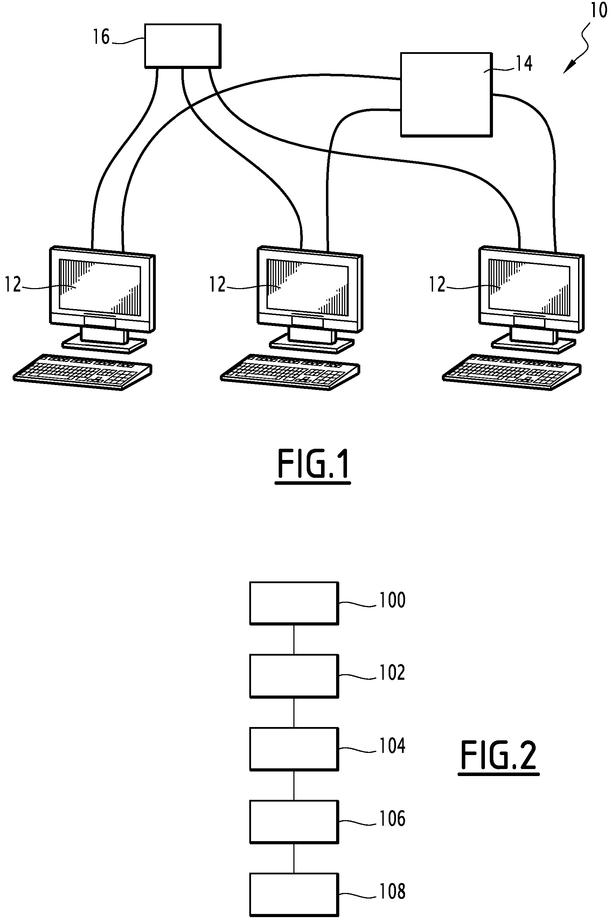

Un réseau informatique 10 est représenté sur la figure 1.

Par simplification, le réseau informatique 10 de la figure 1 comprend trois stations 12, un routeur 14 et un serveur de messagerie électronique 16. Dans un réseau informatique 10 plus complexes, le réseau informatique 10 comprend des milliers de stations 12 et des centaines de routeurs 14.

Les stations 12 sont propres à échanger des données entre elles. Selon l'exemple de la figure 1, les stations 12 sont des ordinateurs.

Le routeur 14 assure l'acheminement des données entre les différentes stations 12.

Un serveur de messagerie électronique 16 est une station (mais de type station serveur) dédiée spécifiquement à la réception de messages électroniques et à leur acheminement vers les autres stations 12 (station de type station client).

Selon un mode de réalisation de l'invention, il est proposé un procédé de caractérisation du réseau informatique 10 tel qu'illustré par l'ordinogramme de la figure 2.

Le procédé de caractérisation comprend une étape 100 de fourniture d'un journal J comportant un ensemble d'événements ayant eu lieu dans le réseau informatique 10.

En informatique, le concept d'historique des événements ou de logging désigne l'enregistrement séquentiel dans un fichier ou une base de données de tous les événements affectant un processus particulier (application, activité d'un réseau informatique...). Le journal (en anglais « log file » ou plus simplement « log »), désigne alors le fichier contenant ces enregistrements. Généralement datés et classés par ordre chronologique, ces derniers permettent d'analyser pas à pas l'activité interne du processus et ses interactions avec son environnement. Pour des questions juridiques, le journal est conservé pour une période d'au moins six mois ce qui rend possible sa fourniture durant une période de temps relativement longue.

L'étape 100 de fourniture du journal J est généralement mise en œuvre par fourniture de fichiers compressés comprenant un ensemble d'événements ayant eu lieu dans le réseau informatique 10.

Le procédé de caractérisation comporte alors une étape 102 de la sélection des événements correspondant à un échange de données entre deux stations 12 parmi la pluralité des événements du journal J.

Le procédé de caractérisation comprend une étape 104 d'extraction d'informations pour au moins un des événements sélectionnés. Les informations extraites sont, par exemple, relatives à la station 12 émettrice de données, à la station 12 réceptrice des données, le routeur 14 par lequel les données ont transité, la nature des données échangées et la date et/ou l'heure de l'échange.

Le procédé de caractérisation comporte une étape 106 de détermination de la topologie du réseau informatique 10 grâce aux informations extraites.

Le procédé comporte, en outre, une étape 108 d'affichage de la topologie du réseau informatique 10.

En option, l'affichage de la topologie est modifiable par utilisation de fonctions permettant d'obtenir des vues très précises sur les dimensions spatio-temporelles. Il est par exemple, possible d'afficher la topologie du réseau informatique 10 déduite des échanges du journal J durant une période temporelle donnée (week-end à titre d'illustration) ou correspondant à un usage particulier (échange de données selon le protocole FTP). Le protocole File Transfer Protocol (protocole de transfert de fichiers) ou FTP est un protocole de communication destiné à l'échange de fichiers sur un réseau Internet. De manière alternative, seule une partie de la topologie du réseau 10 est affichée.

Le procédé proposé permet donc d'obtenir la topologie d'un réseau informatique 10 de manière passive, non intrusive et sans connaissance préalable sur la topologie le réseau informatique 10.

Le procédé proposé est, effectivement, un procédé passif par opposition aux technologies actives impliquant un envoi de paquets de données, par exemple sous forme d'une requête, pour détecter les différentes stations 12 du réseau 10.

De plus, le procédé n'implique pas un accès physique au réseau 10 par ajout de sondes, ceci permettant que le procédé puisse être mise en œuvre n'importe où même à une distance importante des stations 12 du réseau 10.

Cela rend le procédé applicable même pour des réseaux informatiques 10 sécurisés dans lesquels l'envoi de requête ou la pose de sondes physiques sont interdits.

De plus, le procédé est opérationnel sans aucune connaissance a priori sur le réseau 10, comme la nature des stations 12 présentes, la position des routeurs 14 ou la présence d'éventuels pare-feu. En effet, pour établir la topologie du réseau informatique 10, seules les informations du journal J comportant un ensemble d'événements ayant eu lieu dans le réseau informatique 10 sont utilisées par le procédé.

En ce sens, le procédé selon l'invention est automatique par rapport aux procédés de l'état de la technique impliquant l'entrée de données relatives aux stations 12 pour fonctionner.

Le procédé présente, en outre, l'avantage d'être simple à mettre en œuvre. Le procédé est, par exemple, mis en œuvre par une architecture de calculs propre à effectuer des opérations de calculs sur un volume conséquent d'informations, typiquement plusieurs à quelques dizaines de téraoctets de données.

Ainsi, le coût associé à sa mise en œuvre est faible.

La mise en œuvre est rapide, ce qui confère un caractère dynamique au procédé.

En effet, le procédé rend possible la visualisation des évolutions potentielles de la topologie du réseau 10 en temps réel. La détection des changements intervenant dans la topologie du réseau 10 est, par exemple, effectuée de manière automatique, grâce à des algorithmes d'apprentissage.

De préférence, le procédé analyse les évènements du journal J et procède à un regroupement des stations 12 ou des routeurs 14 possédant des caractéristiques proches pour certaines variables de manière à former des sous-réseaux du réseau 10.

L'adresse IP (pour protocole Internet) est un exemple de variable de regroupement. Typiquement, il peut être décidé que toutes les machines partageant le même en-tête d'adresse IP appartiennent au même sous-réseau. Le regroupement est mise en œuvre à l'aide d'une méthode de classification de données souvent désigné sous le terme anglais de « clustering ». La méthode de regroupement hiérarchique ou la méthode de partitionnement de données sont des exemples connus de clustering. Ainsi, le procédé permet une caractérisation et une détermination automatique et sans connaissance a priori des sous-réseaux du réseau 10.

Le procédé comprend une caractéristique du réseau informatique 10 par une détermination d'une ou plusieurs informations relatives à au moins une station 12. Dans cette première option, le procédé de caractérisation comprend également une étape de choix, parmi la pluralité des événements du journal J, des événements impliquant une station 12. Il est ainsi obtenu un nombre total d'événements.

Le procédé comporte alors une étape de détermination des évènements impliquant les trois protocoles les plus fréquemment utilisés par la station 12 considérée. Dans la pratique, deux ou trois protocoles sont considérés.

Le procédé comporte ensuite une étape de calcul du rapport entre le nombre d'événements déterminés sur le nombre total d'événements de la station 12.

Le procédé comprend aussi une étape de déduction de la nature de la station 12 considérée (serveur ou client) en fonction de la valeur du rapport. Par exemple, lorsque le rapport a une valeur supérieure à une certaine valeur seuil, il est considéré que la station 12 est d'un type donné (serveur ou client).

Selon un mode de réalisation, le procédé permet d'obtenir des caractérisations plus fines des stations 12. Dans ce mode de réalisation, le procédé comporte également une étape de détermination des données les plus fréquentes dans la pluralité des événements du journal J. A titre d'exemple, les données déterminées peuvent être des échanges réseau utilisant le protocole SMTP. Le protocole Simple Mail Transfer Protocol (littéralement « Protocole simple de transfert de courrier »), généralement abrégé SMTP, est un protocole de communication utilisé pour transférer le courrier électronique (courriel) vers les serveurs de messagerie électronique.

Dans ce mode de réalisation, le procédé comprend alors une étape de déduction de caractéristiques relatives à la station 12 en fonction des données utilisées par la station 12 considérée. La caractéristique déduite est la connexion de la station 12 considérée au serveur de messagerie électronique 16.

Le procédé permet ainsi de caractériser le réseau informatique 10 en précisant des données non directement liées à la topologie, notamment relatives aux stations 12.

Le réseau informatique 10 ainsi caractérisé par le procédé de caractérisation est notamment exploitable dans le cadre d'un procédé de contrôle du réseau informatique 10.

Un tel procédé de contrôle comporte une étape de caractérisation du réseau informatique 10 par un procédé de caractérisation tel que précédemment décrit pour obtenir un réseau informatique 10 caractérisé.

Le procédé de contrôle comprend une étape de comparaison du réseau informatique 10 ainsi caractérisé à un réseau informatique 10 de référence.

Selon un mode de réalisation, le réseau 10 de référence correspond à un réseau désiré. Dans le cadre de la gestion des réseaux informatiques, un réseau désiré est, par exemple, un réseau 10 dans lequel toutes les stations 12 ont été mises en conformité avec une mise à jour informatique.

Dans ce mode de réalisation, le procédé de contrôle comprend alors une étape de détermination des modifications à apporter au réseau informatique 10 caractérisé pour que le réseau informatique 10 soit identique au réseau désiré.

Selon un autre mode de réalisation, le réseau de référence correspond au réseau informatique 10 en l'absence intrusions sur le réseau informatique 10.

Le procédé de contrôle comprend alors une étape de détermination de la présence d'une intrusion dans le réseau informatique 10 à l'aide du résultat de l'étape de comparaison.

Le procédé de contrôle est alors un procédé de protection du réseau informatique 10 contre les intrusions. La sécurité du réseau informatique 10 est donc augmentée.

En outre, le procédé de contrôle fonctionne de manière furtive ce qui améliore les chances de trouver l'intrusion sans que l'auteur de l'intrusion ne se doute qu'il a été détecté.

Plus généralement ce procédé de contrôle permet de détecter automatiquement des changements du réseau 10, et notamment les anomalies. Une anomalie correspond par exemple à l'apparition d'une station 12 avec des droits administratifs importants. Une activité observée du serveur 16 durant une période de supposée inactivité est également une anomalie. Il est alors possible d'évaluer la criticité des changements détectés.

## Revendications

1. Procédé de caractérisation d'un réseau informatique (10) présentant une topologie et comprenant :
- une pluralité de stations (12) propres à échanger des données entre elles, et
- une pluralité de routeurs (14) assurant l'acheminement des données entre les différentes stations (12),
le procédé comprenant la fourniture d'un journal (J) comportant un ensemble d'événements ayant eu lieu dans le réseau informatique (10),
le procédé étant **caractérisé en ce que** le procédé comporte, en outre :
- une sélection parmi la pluralité des événements du journal (J) des événements correspondant à un même échange de données entre une même première station (12) et une deuxième station (12), pour obtenir des événements sélectionnés,
- une extraction d'au moins une information pour au moins un événement sélectionné, pour obtenir des informations extraites, une information extraite d'un événement sélectionné étant relative à l'un ou plusieurs des éléments du groupe constitué de :
• une station primaire (12), la station primaire (12) étant la station (12) émettrice des données échangées de l'événement sélectionné considéré,
• une station secondaire (12), la station secondaire (12) étant la station (12) réceptrice des données échangées de l'événement sélectionné considéré,
• des routeurs (14) de la pluralité de routeurs (14), les routeurs (14) étant les routeurs (14) par lequel les données échangées de l'événement sélectionné considéré ont transité,
• une nature, la nature étant la nature des données échangées de l'événement sélectionné considéré, et
• une information temporelle, l'information temporelle étant au moins l'un parmi la date et l'heure de l'échange de données de l'événement sélectionné considéré, et
- une détermination d'au moins une partie de la topologie du réseau informatique (10) sur la base des informations extraites.
le procédé comprenant, en outre :
- un choix parmi la pluralité des événements du journal (J) des événements impliquant une même troisième station (12) de la pluralité de stations (12), pour obtenir des événements choisis,
- une détermination parmi les événements choisis, des événements impliquant les trois protocoles plus fréquemment utilisés par la troisième station (12) considérée, pour obtenir des événements déterminés.
- un calcul du rapport entre le nombre d'événements déterminés sur le nombre d'événements choisis, pour obtenir une valeur du rapport, et
- une déduction de la nature de la troisième station (12) considérée en fonction de la valeur du rapport.

2. Procédé de caractérisation selon la revendication 1, dans lequel le procédé comporte, en outre :
- une détermination des données les plus fréquentes émises dans la pluralité des événements du journal (J), par une même quatrième station (12), pour obtenir des données les plus fréquentes déterminées, et
- une déduction d'une ou plusieurs caractéristiques relatives à la quatrième station (12) en fonction des données les plus fréquentes déterminées.

3. Procédé de caractérisation selon la revendication 2, dans lequel :
- le réseau (10) comporte un serveur de messagerie électronique (16),
- les données les plus fréquentes déterminées utilisent un protocole de communication spécifique, et
- la caractéristique déduite est une connexion de la quatrième station (12) considérée au serveur de messagerie électronique (16).

4. Procédé de caractérisation selon l'une quelconque des revendications 1 à 3, dans lequel le procédé comporte, en outre, un affichage de la topologie du réseau informatique (10).

5. Procédé de caractérisation selon l'une quelconque des revendications 1 à 4, comprenant, en outre, un regroupement des stations (12) et/ou routeurs (14) par une méthode de classification de données.

6. Procédé de contrôle d'un réseau informatique (10) présentant une topologie et comprenant :
- une pluralité de stations (12) propres à échanger des données entre elles, et
- une pluralité de routeurs (14) assurant l'acheminement des données entre les différentes stations (12),
le procédé étant **caractérisé en ce que** le procédé comprend :
- une caractérisation du réseau informatique (10) par un procédé de caractérisation selon l'une quelconque des revendications 1 à 5 pour obtenir un réseau informatique (10) caractérisé, et
- une comparaison du réseau informatique (10) caractérisé à un réseau informatique de référence.

7. Procédé de contrôle selon la revendication 6, dans lequel le procédé de contrôle comprend, en outre, une détermination des modifications à apporter au réseau informatique (10) caractérisé pour que le réseau informatique (10) soit identique au réseau de référence.

8. Procédé de contrôle selon la revendication 6, dans lequel le procédé de contrôle comprend, en outre, une détermination de la présence d'une anomalie dans le réseau (10) selon un résultat de l'étape de comparaison.

9. Programme d'ordinateur comportant des instructions de code de programmation aptes à être mises en œuvre par un processeur, **caractérisé en ce que** le programme est apte à mettre en œuvre un procédé de caractérisation d'un réseau informatique (10) selon l'une quelconque des revendications 1 à 5 ou un procédé de contrôle d'un réseau informatique (10) selon l'une quelconque des revendications 6 à 8.

## Patentansprüche

1. Verfahren zur Charakterisierung eines Computernetzwerks (10), das eine Topologie aufweist und Folgendes umfasst:
- eine Mehrzahl von Stationen (12), die geeignet sind, Daten miteinander auszutauschen und
- eine Mehrzahl von Routern (14), die die Weiterleitung von Daten zwischen den unterschiedlichen Stationen (12) gewährleisten,
wobei das Verfahren das Bereitstellen einer Protokollierung (J) umfasst, die einen Satz von Ereignissen enthält, die in dem Computernetzwerk (10) stattgefunden haben
wobei das Verfahren **dadurch gekennzeichnet ist, dass** das Verfahren weiterhin umfasst:
- eine Auswahl der Ereignisse, die demselben Datenaustausch zwischen derselben ersten Station (12) und derselben zweiten Station (12) entsprechen, aus der Mehrzahl der Ereignisse in der Protokollierung (J), um ausgewählte Ereignisse zu erhalten,
- für mindestens ein ausgewähltes Ereignis, Extrahieren mindestens einer Information, um extrahierte Informationen zu erhalten, wobei sich eine aus einem ausgewählten Ereignis extrahierte Information auf eines oder mehrere der Elemente der Gruppe bezieht, die besteht aus:
• Einer primären Station (12), wobei die primäre Station (12) die sendende Station (12) der ausgetauschten Daten des betrachteten ausgewählten Ereignisses ist,
• einer sekundären Station (12), wobei die sekundäre Station (12) die empfangene Station (12) der ausgetauschten Daten des betrachteten ausgewählten Ereignisses ist,
• Router (14) der Mehrzahl von Routern (14), wobei die Router (14) die Router (14) sind, die die ausgetauschten Daten des betrachteten ausgewählten Ereignisses durchlaufen haben,
• eine Art, wobei die Art die Art der ausgetauschten Daten des betrachteten ausgewählten Ereignisses ist, und
• eine zeitliche Information, wobei die zeitliche Information mindestens eines von dem Datum und der Uhrzeit des Austauschs des betrachteten ausgewählten Ereignisses ist und
- eine Bestimmung mindestens eines Teils der Topologie des Computernetzwerks (10) auf der Grundlage der extrahierten Informationen.
Wobei das Verfahren ferner aufweist:
- eine Auswahl von Ereignissen aus der Mehrzahl von Ereignissen in der Protokollierung (J), die dieselbe dritte Station (12) der Mehrzahl von Stationen (12) einschließen, um ausgewählte Ereignisse zu erhalten,
- eine Bestimmung, unter den ausgewählten Ereignissen, von Ereignissen, die die drei Protokolle einschließen, die von der betrachteten dritten Station (12) am häufigsten verwendet werden, um ermittelte Ereignisse zu erhalten.
- eine Berechnung des Verhältnisses der Anzahl der ermittelten Ereignisse zur Anzahl der ausgewählten Ereignisse, um einen Verhältniswert zu erhalten, und
- eine Ableitung der Art der betrachteten dritten Station (12) in Abhängigkeit des Verhältniswerts.

2. Charakterisierungsverfahren nach Anspruch 1, wobei das Verfahren weiterhin umfasst:
- eine Bestimmung der häufigsten Daten, die in der Mehrzahl von Ereignissen der Protokollierung (J) übertragen wurden, durch eine vierte Station (12), um ermittelte häufigste Daten zu erhalten und
- eine Ableitung von ein oder mehreren Eigenschaften, die sich auf die vierte Station (12) beziehen, in Abhängigkeit der ermittelten häufigsten Daten.

3. Charakterisierungsverfahren nach Anspruch 2, in dem:
- das Netzwerk (10) einen E-Mail-Server (16) umfasst,
- die ermittelten häufigsten Daten ein spezifisches Kommunikationsprotokoll verwenden, und
- die abgeleitete Eigenschaft eine Verbindung der vierten Station (12) mit dem E-Mail-Server (16) ist.

4. Charakterisierungsverfahren nach einem der Ansprüche 1 bis 3, wobei das Verfahren ferner die Anzeige der Topologie des Computernetzwerks (10) umfasst.

5. Charakterisierungsverfahren nach einem der Ansprüche 1 bis 4, ferner umfassend das Umgruppieren der Stationen (12) und/oder Router (14) mittels eines Datenklassifizierungsverfahrens.

6. Verfahren zum Steuern eines Computernetzwerks (10) mit einer Topologie und umfassend:
- eine Mehrzahl von Stationen (12), die zum Austausch von Daten untereinander geeignet sind und
- eine Mehrzahl von Routern (14), die die Weiterleitung von Daten zwischen den unterschiedlichen Stationen (12) gewährleisten,
wobei das Verfahren **dadurch gekennzeichnet ist, dass** das Verfahren umfasst:
- eine Charakterisierung des Computernetzwerks (10) mittels des Charakterisierungsverfahrens nach einem der Ansprüche 1 bis 5, um ein charakterisiertes Computernetzwerk (10) zu erhalten, und
- einen Vergleich des charakterisierten Computernetzwerks (10) mit einem Referenzcomputernetzwerk.

7. Steuerungsverfahren nach Anspruch 6, in dem das Überwachungsverfahren ferner eine Bestimmung umfasst, welche Änderungen an dem charakterisierten Computernetzwerk (10) vorzunehmen sind, damit das Computernetzwerk (10) mit dem Referenzcomputernetzwerk identisch ist.

8. Steuerungsverfahren nach Anspruch 6, in dem das Steuerungsverfahren ferner eine Bestimmung des Vorhandenseins einer Anomalie im Netzwerk (10) unter Verwendung des Ergebnisses des Vergleichsschritts umfasst.

9. Computerprogramm mit Programmiercodeanweisungen, die zur Implementierung durch einen Prozessor geeignet sind, **dadurch gekennzeichnet, dass** das Programm zur Implementierung eines Verfahrens zur Charakterisierung eines Computernetzwerks (10) nach einem der Ansprüche 1 bis 5 oder eines Verfahrens zum Steuern eines Computernetzwerks (10) nach einem der Ansprüche 6 bis 8 geeignet ist.

## Claims

1. A method for characterizing a computer network (10) having a topology and comprising:
- a plurality of stations (12) capable of exchanging data with each other, and
- a plurality of routers (14) conveying data between the different stations (12),
the method comprising providing a log (J) including a set of events having taken place in the computer network (10),
the method being **characterized in that** the method further includes:
- the selection of events corresponding to a same exchange of data between a same first station (12) and a second station (12) from among the plurality of events in the log (J), to obtained selected events,
- for at least one selected event, extracting at least one information to obtain extracted informations, an extracted information of a selected event being relative to one or more elements from the group made up of:
• a primary station (12), the primary station (12) being a station (12) emitting exchanged data of the considered selected event,
• a secondary station (12), the secondary station (12) being a station (12) receiving exchanged data of the considered selected event,
• routers (14) of the plurality of routers (14), the routers (14) being routers (14) through which the exchanged data of the considered selected event passed,
• a nature, the nature being the kind of the exchanged data of said selected event,
• a temporal information, the temporal information being the date and time of the exchange of data of the considered selected event, and
- determining at least part of the topology of the computer network (10) based on the extracted information,
the method further comprises:
- choosing among a plurality of events of the log the events involving one station (12) from the plurality of stations (12),
- determining, among the selected events, events involving the three most frequently used communication protocols by the considered third station (12), to obtain determined events,
- computing the ratio between the number of determined events and the number of chosen events, and
- deducing the nature of the considered third station (12) based on the value of the ratio.

2. The characterizing method according to claim 1, wherein the method further includes:
- determining the data most frequently transmitted in the plurality of events in the log (J), by a same fourth station (12), to obtain the determined most frequent data and
- deducing one or several characteristics relative to the fourth station (12) based on the determined most frequent data.

3. The characterizing method according to claim 2, wherein:
- the network (10) includes an electronic messaging server (16),
- the most frequent determined data use a specific communication protocol, and
- the deduced characteristic is the connection of the considered fourth station (12) to the electronic messaging server (16).

4. The characterizing method according to any one of claims 1 to 3, wherein the method further includes displaying the topology of the computer network (10).

5. The characterizing method according to any one of claims 1 to 4, comprising the grouping of the stations (12) and/or routers (14) using a data classification method.

6. A method for monitoring a computer network (10) having a topology and comprising:
- a plurality of stations (12) capable of exchanging data with each other, and
- a plurality of routers (14) conveying data between the different stations (12),
the method being **characterized in that** the method comprises:
- characterizing the computer network (10) using a characterization method according to any one of claims 1 to 5 to obtain a characterized computer network (10), and
- comparing the characterized computer network (10) to a reference computer network.

7. The monitoring method according to claim 6, wherein the monitoring method comprises determining changes to be made to the characterized computer network (10) so that the computer network (10) is identical to the reference network.

8. The monitoring method according to claim 6, wherein the monitoring method comprises determining the presence of an anomaly in the network (10) using the result of the comparison step.

9. A computer program including programming code instructions that can be implemented by a processor, **characterized in that** the program is capable of implementing the method for characterizing a computer network (10) according to any one of claims 1 to 5 or the method for monitoring a computer network (10) according to any one of claims 6 to 8.
